# EUROPÄISCHE PATENTSCHRIFT

(11) **EP 2 327 598 B1**
(45) Veröffentlichungstag und Bekanntmachung des Hinweises auf die Patenterteilung: **21.03.2018**
(21) Anmeldenummer: 10013641.5
(22) Anmeldetag: 14.10.2010
(51) Int. Cl.: B60W 20/00, B60W 10/26

(54) **VERFAHREN ZUR ANPASSUNG EINES VORGEGEBENEN SOLL-LADEZUSTANDS EINES ELEKTRISCHEN ENERGIESPEICHERS EINES FAHRZEUGS**
METHOD FOR ADJUSTING A PREDEFINED TARGET CHARGE STATE OF AN ELECTRICAL ENERGY STORAGE DEVICE OF A VEHICLE
PROCÉDÉ D'ADAPTATION D'UN ÉTAT DE CHARGE DE CONSIGNE PRÉDÉFINI D'UN ACCUMULATEUR D'ÉNERGIE ÉLECTRIQUE DE VÉHICULE

(30) Priorität: 30.11.2009 US 264976 P
(43) Veröffentlichungstag der Anmeldung: 01.06.2011
(73) Patentinhaber: Bayerische Motoren Werke Aktiengesellschaft, 80809 München (DE)
(72) Erfinder: Müller, Jonas, 81369 München (DE); Schloen, Oliver, 85540 Haar (DE)

(56) Entgegenhaltungen:
- EP-A1- 2 071 162
- EP-A2- 0 829 389
- US-A- 5 778 326
- US-A1- 2002 107 618

## Beschreibung

Die vorliegende Erfindung betrifft ein Verfahren zur Anpassung eines vorgegebenen Soll-Ladezustands eines elektrischen Energiespeichers eines Fahrzeugs.

Die vorliegende Erfindung betrifft ein Verfahren gemäß den Merkmalen des Patentanspruches 1.

Aus der EP-A-2071162 ist ein Verfahren zur Anpassung eines vorgegebenen Soll-Ladezustands eines elektrischen Energiespeichers eines Hybridfahrzeugs bei Bergauf- und Bergabfahrten bekannt, wobei ermittelt wird, ob gemäß einer vorgegebenen Entscheidungslogik eine Bergauf- und Bergabfahrt vorliegt und der Soll-Ladezustand gemäß einer vorgegebenen Anpassungslogik angepasst wird, wenn eine Bergauf- und Bergabfahrt vorliegt.

Zum technischen Hintergrund der Erfindung zählen die US 2002/107618 A1, US 5 778 326 A sowie die EP 0829389 A2. Hybridfahrzeuge weisen eine komplexe Betriebsstrategie auf, gemäß der elektronisch gesteuert wird, in welchen Betriebszuständen rein verbrennungsmotorisch, verbrennungsmotorisch und unterstützend elektromotorisch und gegebenenfalls rein elektromotorisch gefahren wird. Hierarchisch "unterhalb" der Betriebsstrategie angesiedelt ist die Ladezustandsregelung für den elektrischen Energiespeicher. Vereinfacht gesprochen wird als Führungsgröße ein Soll-Ladezustand ermittelt bzw. definiert und der Ist-Ladezustand hierauf basierend geregelt.

Aufgabe der Erfindung ist es, ein Verfahren zur Anpassung eines vorgegebenen Soll-Ladezustands eines elektrischen Energiespeichers eines Fahrzeugs bei Bergauf- und Bergabfahrten zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen. Ausgangspunkt der Erfindung ist ein Verfahren zur Anpassung eines vorgegebenen Soll-Ladezustands eines elektrischen Energiespeichers eines Fahrzeugs, insbesondere eines Hybridfahrzeugs bei Bergauf- und Bergabfahrten.

Der Begriff "Soll-Ladezustand" bezeichnet denjenigen Ladezustand, auf den der Ist-Ladezustand des Energiespeichers geregelt werden soll. Der Ist-Ladezustand kann sowohl unterhalb als auch oberhalb des Soll-Ladezustands liegen.

Der Begriff "Energiespeicher" ist sehr breit auszulegen. Er umfasst insbesondere Batterien bzw. Akkumulatoren, wie sie bei konventionellen Fahrzeugen, bei Hybridfahrzeugen oder auch bei reinen Elektrofahrzeugen anzutreffen sind. Der Begriff Energiespeicher ist aber nicht auf Batterien bzw. Akkumulatoren beschränkt, sondern umfasst auch auf andere Arten elektrischer Energiespeicher, wie z. B. Kondensatoren, insbesondere sogenannte "Super-Caps".

Der bereits eingeführte Begriff "Hybridfahrzeug" umfasst Fahrzeuge, deren Antriebsstrang einen Verbrennungsmotor und mindestens eine Vortrieb erzeugende elektrische Maschine aufweist, wobei es sich um sogenannte "Full-Hybrids" als auch um sogenannte "Mild-Hybrids" handeln kann. Ein "Full-Hybrid" kann wahlweise rein verbrennungsmotorisch, verbrennungsmotorisch und unterstützend elektromotorisch oder rein elektromotorisch angetrieben werden, wohingegen ein Mild-Hybrid lediglich verbrennungsmotorisch oder wahlweise verbrennungsmotorisch und unterstützend elektromotorisch angetrieben werden kann.

Der Grundgedanke der Erfindung besteht darin, dass der Soll-Ladezustand bei Bergauf- bzw. Bergabfahrten so geregelt werden sollte, dass der Energiespeicher beim Bergabfahren hinreichend aufnahmefähig ist, d.h. dass die beim Bergabfahren frei werdende potentielle Energie auch tatsächlich rekuperiert, d. h. in elektrische Energie umgewandelt und im Energiespeicher gespeichert werden kann.

So sollte die Regelung beispielsweise dergestalt sein, dass bei Erreichen einer Passhöhe hinreichend Ladekapazität vorgehalten wird, sodass beim anschließenden Bergabfahren auch tatsächlich die frei werdende potentielle Energie rekuperiert werden kann. Vereinfacht ausgedrückt sollte der Soll-Ladezustand so geregelt werden, dass der Ist-Ladezustand des Energiespeichers im Bereich lokaler Maxima eines Streckenprofils relativ gering ist, so dass die beim anschließenden Bergabfahren frei werdende Energie dann tatsächlich rekuperiert werden kann.

Gemäß der Erfindung wird zunächst gemäß einer vorgegebenen Entscheidungslogik ermittelt, ob überhaupt eine Bergauf- oder Bergabfahrt im Sinne der Entscheidungslogik vorliegt. Ferner wird ermittelt, ob der Ist-Ladezustand des Energiespeichers innerhalb eines vorgegebenen Ladezustandsbereichs liegt. Beispielsweise kann ein Ladezustandsbereich zwischen 40% und 70% der Maximalkapazität des Energiespeichers definiert sein. Ein derartiger Bereich mit einer Untergrenze und einer Obergrenze ist üblicherweise für Batterien bzw. Akkumulatoren als Hauptarbeitsbereich vorgegeben, da ein Betrieb des Energiespeichers unterhalb der Untergrenze bzw. oberhalb der Obergrenze dieses Bereichs die Lebensdauer des Energiespeichers stark verkürzen würde.

Der Kern der Erfindung besteht darin, dass der Soll-Ladezustand gemäß einer vorgegebenen Anpassungslogik angepasst wird, wenn mittels der vorgegebenen Entscheidungslogik erkannt wird, dass eine Bergauf- oder Bergabfahrt vorliegt und wenn zudem der Ist-Ladezustand des Energiespeichers innerhalb des vorgegebenen Ladezustandsbereichs liegt.

Gemäß der Erfindung ist vorgesehen, dass der Soll-Ladezustand über einen "normalen" Soll-Ladezustand angehoben wird, wenn eine Bergabfahrt vorliegt. Umgekehrt wird der Soll-Ladezustand unter einen "normalen" Soll-Ladezustand abgesenkt, wenn eine Bergauffahrt vorliegt. Mit dieser Logik wird erreicht, dass bei Bergabfahrten hinreichend Ladekapazität vorhanden ist, um die beim Bergabfahren frei werdende potentielle Energie in elektrische Energie umzuwandeln und im Energiespeicher speichern zu können.

Der normale Soll-Ladezustand kann beispielsweise im Bereich zwischen 50% und 70%, vorzugsweise bei ca. 60% der Maximalkapazität des Energiespeichers liegen.

Nach einer Weiterbildung der Erfindung ist der Gradient der Erhöhung bzw. Verringerung des Soll-Ladezustands eine Funktion der Steigung bzw. des Gefälles der "zuletzt" befahrenen Strecke, z. B. eines vorgegebenen, zurückliegenden Streckenabschnitts. Dabei kann beispielsweise ein Streckenabschnitt von mehreren hundert Metern oder von einigen wenigen Kilometern berücksichtigt werden.

Nach einer Weiterbildung der Erfindung ist vorgesehen, dass bei der Entscheidungslogik zur Ermittlung, ob eine Bergauf- oder eine Bergabfahrt vorliegt, ein Höhen- und/oder Steigungssignal ausgewertet wird, wobei es sich um ein absolutes Höhen- oder Steigungssignal oder auch um ein relatives Höhen- oder Steigungssignal handeln kann. Mit "absolut" ist gemeint, dass z. B. die Höhe über dem Meeresspiegel überwacht wird. Alternativ dazu könnte auch die Höhe bzw. die Höhenänderung seit dem letzten Motorstart o.ä. überwacht werden. Alternativ dazu kann auch die absolute Steigung bzw. das absolute Gefälle der befahrenen Strecke ausgewertet werden.

Das absolute oder relative Höhen- und/oder Steigungssignal kann z.B. durch Messen des Umgebungsluftdrucks gewonnen werden. Moderne Fahrzeuge mit Verbrennungsmotoren sind üblicherweise bereits mit einem Luftdrucksensor ausgestattet, da der Umgebungsluftdruck ein wesentlicher Eingangsparameter für die Kraftstoffeinspritzregelung ist. Es könnte also mit dem ohnehin bereits im Fahrzeug vorhandenen Luftdruck bzw. "Höhensignal" gearbeitet werden.

Alternativ oder ergänzend dazu könnte ein Höhensignal auch aus den Daten gewonnen werden, die von einem Navigationssystem geliefert werden, das z.B. fest im Fahrzeug verbaut ist.

Alternativ dazu könnte ein "Steigungssignal" aus dem Radwiderstandsmoment, d. h. aus dem Antriebsmoment und der dabei auftretenden Fahrzeugbeschleunigung ermittelt werden, wobei hier z.B. mit einer geschätzten bzw. durchschnittlichen Fahrzeugmasse gerechnet werden kann. Aus dem über die Fahrstrecke integrierten Radwiderstand könnte dann ein Höhensignal abgeleitet werden.

Alternativ oder ergänzend dazu könnte auch der Nickwinkel, d.h. der Neigungswinkel des Fahrzeugs gegenüber der Horizontalen ausgewertet und hieraus ein Steigungssignal abgeleitet werden, aus dem wiederum durch Integration ein Höhensignal generiert werden kann.

Nach einer Weiterbildung der Erfindung wird aus dem absoluten oder relativen Höhen- und/oder Steigungssignal ein mittlerer Höhengradient gebildet. Das Zeitfenster, über den dieser Gradient gemittelt wird, ist dabei frei einstellbar. Somit stellt der Höhengradient die Höhendifferenz, über die das Fahrzeug innerhalb des gegebenen Zeitfensters bewegt wurde, dar.

Dies kann zum Beispiel geschehen, indem aus dem absoluten oder relativen Höhen- und/oder Steigungssignal ein erstes Signal und ein zweites Signal gebildet wird. Das erste Signal gibt ungefiltert oder nur schwach gefiltert zeit-oder streckenbezogene Höhen- bzw. Steigungsänderungen wieder. Das zweite Signal gibt stärker gefiltert als das erste Signal zeit- oder streckenbezogene Höhen- bzw. Steigerungsänderungen wieder. "Stärker gefiltert" bedeutet in diesem Zusammenhang, dass sich tatsächliche Steigungsänderungen der aktuell befahrenen Strecke bzw. Höhenänderungen des Fahrzeugs nur abgeschwächt bzw. zeitlich verzögert in dem zweiten Signal wiederspiegeln, wohingegen sich Steigungsänderungen bzw. Höhenänderungen sehr ähnlich dem tatsächlichen Streckenprofil in dem ersten Signal abbilden.

Es kann vorgesehen sein, dass auf das Vorliegen einer Bergauf- bzw. Bergabfahrt nur dann erkannt wird, wenn der Differenzbetrag der beiden Signale einen vorgegebenen Wert übersteigt.

Nach einer Weiterbildung der Erfindung ist vorgesehen, dass die Erhöhung bzw. Verringerung des Soll-Ladezustands in Abhängigkeit von dem Differenzbetrag der beiden Signale vorgenommen wird.

Die Erfindung umfasst ferner ein Verfahren zur Regelung des Ist-Ladezustands eines elektrischen Energiespeichers eines Fahrzeugs, wobei ein Soll-Ladezustand als Führungsgröße vorgegeben wird, der nach dem oben beschriebenen Verfahren ermittelt wird.

Im Folgenden wird die Erfindung im Zusammenhang mit der Zeichnung näher erläutert. Es zeigen:
- Figur 1: in schematischer Darstellung den Grundgedanken der Anpassung des Soll-Ladezustands eines Energiespeichers bei Bergauf- bzw. Bergabfahrten; und
- Figur 2: ein Flussdiagramm zur Verdeutlichung der Anpassungslogik.

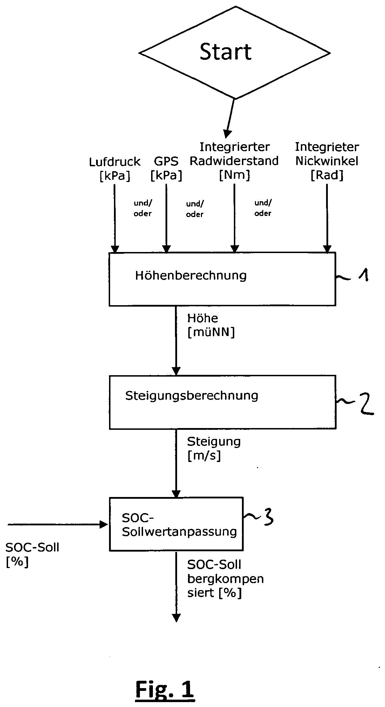

Ausgangspunkt für die Anpassung des Soll-Ladezustands eines elektrischen Energiespeichers eines Fahrzeugs ist ein Höhen- und/oder Steigungssignal. Bei dem in Figur 1 gezeigten Schema wird ein Höhensignal 1 z.B. aus einem gemessenen Luftdrucksignal und/oder aus den Daten eines Navigationssystems und/oder aus einem integrierten Radwiderstandssignal bzw. einem integrierten Antriebsmoment und/oder aus einem integrierten Neigungswinkel des Fahrzeugs abgeleitet.

Der Gradient, d. h. die Ableitung des Höhensignals 1 nach der Wegstrecke ergibt ein Steigungssignal 2, welches wiederspiegelt, ob das Fahrzeug in der Ebene oder auf einer weitgehend ebenen Fahrbahn, auf einer "Bergstrecke" oder auf einer "Gefällestrecke" fährt. Letzeres ist ein wesentlicher Eingangsparameter der Soll-Ladezustandsanpassung, die hier schematisch durch den Block 3 angedeutet ist.

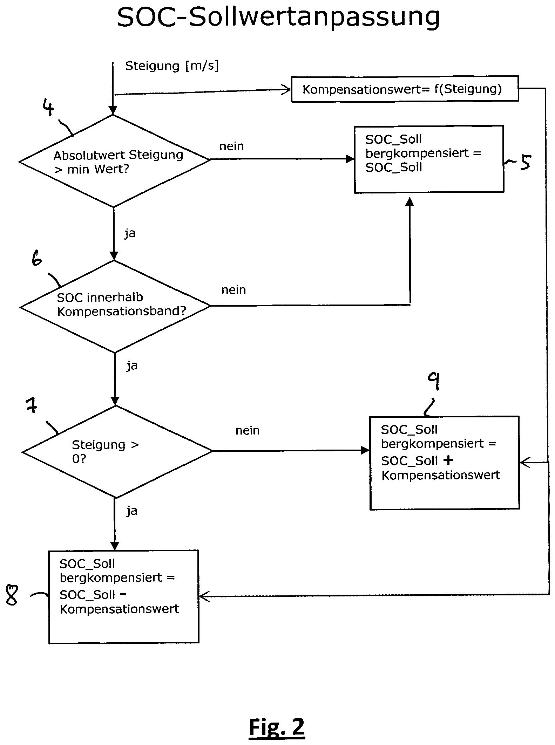

Die Logik der Soll-Ladezustandsanpassung ist in dem in Figur 2 gezeigten Flussdiagramm näher verdeutlicht. In einem Schritt 4 wird zunächst überprüft, ob die Steigung der Fahrstrecke einen vorgegebenen Mindeststeigungswert überschreitet. Ist dies nicht der Fall, so wird der Soll-Ladezustand, wie in Block 5 angedeutet, auf einem vorgegebenen "normalen Soll-Ladezustand" gehalten, der z. B. im Bereich zwischen 50% und 70% der maximalen Kapazität des Energiespeichers liegt. Der normale Soll-Ladezustand kann beispielsweise auf einen Wert von 60% festgelegt sein.

Ergibt die Überprüfung in Schritt 4 hingegen, dass die Steigung der Fahrstrecke größer als ein vorgegebener Steigungswert ist, so wird in Schritt 6 überprüft, ob der tatsächliche Ladezustand, der im Folgenden auch als "Ist-Ladezustand" bezeichnet wird, innerhalb eines "Kompensationsbandes" liegt, das durch eine untere Ladezustandsgrenze und eine obere Ladezustandsgrenze definiert ist. Die untere Ladezustandsgrenze kann z. B. auf einen Wert von 40% und die obere Ladezustandsgrenze auf einen Wert von 70% der Maximalkapazität des elektrischen Energiespeichers des Fahrzeugs festgelegt sein. Befindet sich der Ist-Ladezustand des elektrischen Energiespeichers unterhalb des Kompensationsbandes oder darüber, so wird gemäß Block 5 keine Änderung des Soll-Ladezustandes vorgenommen bzw. der Soll-Ladezustand wird auf dem vorgegebenen normalen Soll-Ladezustand von z. B. 60% gehalten.

Befindet sich der Ist-Ladezustand hingegen innerhalb des Kompensationsbandes, so wird in Schritt 7 überprüft, ob eine Bergauffahrt oder eine Bergabfahrt vorliegt. Liegt eine Bergauffahrt vor, so wird ein Soll-Ladezustand eingestellt, der sich aus dem normalen Soll-Ladezustand (z. B. 60%) abzüglich eines Kompensationswerts ergibt. Der Kompensationswert wiederum ist eine Funktion der Differenz zweier aus dem Höhen- und/oder Steigungssignal abgeleiteter Signale.

Wird hingegen eine Gefällestrecke befahren, so wird ein Soll-Ladezustand ermittelt, der sich aus dem normalen Soll-Ladezustand (z. B. 60%) zuzüglich eines Kompensationswerts ergibt, der ebenfalls aus der soeben beschriebenen Differenz der beiden aus dem Höhen- und/oder Steigungssignal abgeleiteten, gefilterten Signale ergibt.

## Patentansprüche

1. Verfahren zur Anpassung eines vorgegebenen Soll-Ladezustands eines elektrischen Energiespeichers eines Fahrzeugs, insbesondere eines Hybridfahrzeugs, bei Bergauf- und Bergabfahrten, mit folgenden Schritten:
a) Ermitteln, ob, gemäß einer vorgegebenen Entscheidungslogik, eine Bergauf- oder Bergabfahrt vorliegt,
b) Ermitteln, ob ein Ist-Ladezustand des Energiespeichers innerhalb eines vorgegebenen Ladezustandsbereichs liegt, und
c) Anpassen des Soll-Ladezustands gemäß einer vorgegebenen Anpassungslogik, wenn
- eine Bergauf- oder Bergabfahrt vorliegt und
- der Ist-Ladezustand des Energiespeichers innerhalb des vorgegebenen Ladezustandsbereichs liegt.

2. Verfahren nach Anspruch 1, **dadurch gekennzeichnet, dass** bei Durchlaufen des Schritts c) der Soll-Ladezustand erhöht wird, wenn eine Bergabfahrt vorliegt.

3. Verfahren nach Anspruch 1 oder 2, **dadurch gekennzeichnet, dass** bei Durchlaufen des Schritts c) der Soll-Ladezustand verringert wird, wenn eine Bergauffahrt vorliegt.

4. Verfahren nach einem der Ansprüche 1 bis 3, **dadurch gekennzeichnet, dass** der Gradient der Erhöhung bzw. Verringerung des Soll-Ladezustands betragsmäßig umso größer gewählt wird, je größer das Gefälle bzw. die Steigung der zuletzt befahrenen Strecke ist.

5. Verfahren nach einem der Ansprüche 1 bis 4, **dadurch gekennzeichnet, dass** bei der in Schritt a) angewendeten Entscheidungslogik ein absolutes oder relatives Höhen- und/oder Steigungssignal (1,2) ausgewertet wird.

6. Verfahren nach Anspruch 5, **dadurch gekennzeichnet, dass** das absolute oder relative Höhen- und/oder Steigungssignal (1, 2) ermittelt wird, indem
- der Umgebungsluftdruck gemessen wird und/oder
- Höhensignale eines Navigationssystems ausgewertet werden und/oder
- ein Antriebsdrehmoment und/oder
- eine Fahrzeugbeschleunigung ausgewertet wird und/oder
- die Neigung des Fahrzeugs gegenüber einer Horizontalen ausgewertet wird.

7. Verfahren nach einem der Ansprüche 5 oder 6, **dadurch gekennzeichnet, dass** aus dem absoluten oder relativen Höhen- und/oder Steigungssignal (1,2)
- ein erstes Signal gebildet wird, welches zeit- oder streckenbezogene Höhen- bzw. Steigungsänderungen ungefiltert oder nur schwach gefiltert wiedergibt, und
- ein zweites Signal gebildet wird, welches zeit- oder streckenbezogene Höhen- bzw. Steigungsänderungen relativ zu dem ersten Signal stärker gefiltert wiedergibt, und
dass auf das Vorliegen einer Bergauf- bzw. Bergabfahrt erkannt wird, wenn der Differenzbetrag der beiden Signale einen vorgegebenen Wert übersteigt.

8. Verfahren nach Anspruch 7, **dadurch gekennzeichnet, dass** die Erhöhung bzw. Verringerung des Soll-Ladezustands in Abhängigkeit von dem Differenzbetrag der beiden Signale vorgenommen wird.

9. Verfahren zur Regelung des Ist-Ladezustands eines elektrischen Energiespeichers eines Fahrzeugs, wobei ein Soll-Ladezustand als Führungsgröße vorgegeben wird,
**dadurch gekennzeichnet, dass** der Soll-Ladezustand nach einem Verfahren gemäß einem der vorangehenden Ansprüche ermittelt wird.

## Claims

1. A method for adapting a specified desired state of charge of an electrical energy accumulator of a vehicle, especially a hybrid vehicle, when travelling uphill and downhill, with the following steps:
a) ascertaining, in accordance with a specified decision logic, whether the vehicle is travelling uphill or downhill,
b) ascertaining whether an actual state of charge of the energy accumulator lies within a specified state-of-charge range, and
c) adapting the desired state of charge in accordance with a specified adaptation logic if
- the vehicle is travelling uphill or downhill and
- the actual state of charge of the energy accumulator lies within the specified state-of-charge range.

2. A method according to Claim 1, **characterised in that** when carrying out step c) the desired state of charge is increased if the vehicle is travelling downhill.

3. A method according to Claim 1 or Claim 2, **characterised in that** when carrying out step c) the desired state of charge is decreased if the vehicle is travelling uphill.

4. A method according to one of Claims 1 to 3, **characterised in that** the gradient of the increase or decrease in the desired state of charge is selected to be greater in terms of amount, the greater the downward slope or the inclination of the route section last travelled.

5. A method according to one of Claims 1 to 4, **characterised in that** with the decision logic applied in step a) an absolute or relative altitude signal and/or inclination signal (1, 2) is evaluated.

6. A method according to Claim 5, **characterised in that** the absolute or relative altitude signal and/or inclination signal (1, 2) is ascertained **in that**
- the ambient air pressure is measured and/or
- altitude signals of a navigation system are evaluated and/or
- a driving torque and/or
- a vehicle acceleration is evaluated and/or
- the inclination of the vehicle relative to a horizontal plane is evaluated.

7. A method according to one of Claims 5 or 6, **characterised in that** from the absolute or relative altitude signal and/or inclination signal (1, 2)
- a first signal is formed which represents time-related or route section-related changes in altitude or in inclination in an unfiltered manner or in an only slightly filtered manner, and
- a second signal is formed which represents time-related or route section-related changes in altitude or in inclination in a more filtered manner compared with the first signal, and
**in that** it is recognised that the vehicle is travelling uphill or downhill if the amount of the difference between the two signals exceeds a specified value.

8. A method according to Claim 7, **characterised in that** the increase or decrease in the desired state of charge is carried out as a function of the amount of the difference between the two signals.

9. A method for regulating the actual state of charge of an electrical energy accumulator of a vehicle, wherein a desired state of charge is specified as reference variable,
**characterised in that** the desired state of charge is ascertained according to a method according to one of the preceding claims.

## Revendications

1. Procédé permettant d'adapter un état de charge de consigne prédéfini d'un accumulateur d'énergie électrique d'un véhicule, en particulier d'un véhicule électrique en cas de parcours en montée et en descente, comprenant les étapes suivantes consistant à :
a) déterminer si, conformément à une logique de décision prédéfinie on est en présence d'un déplacement en montée ou d'un déplacement en descente,
b) déterminer si l'état de charge réel de l'accumulateur d'énergie est située dans une plage d'état de charge prédéfinie, et
c) adapter l'état de charge de consigne conformément à une logique d'adaptation prédéfinie si :
- on est en présence d'un déplacement en montée ou en descente, et
- l'état de charge réel de l'accumulateur d'énergie est situé dans la plage d'état de charge prédéfinie.

2. Procédé conforme à la revendication 1,
**caractérisé en ce que**
lors de la mise en oeuvre de l'étape c), l'état de charge de consigne est augmenté lorsque l'on est en présence d'un déplacement en descente.

3. Procédé conforme à la revendication 1 ou 2,
**caractérisé en ce que**
lors de la mise en oeuvre de l'étape c), l'état de charge de consigne est diminué lorsque l'on est en présence d'un déplacement en montée.

4. Procédé conforme à l'une des revendications 1 à 3,
**caractérisé en ce que**
le gradient de l'augmentation ou de la diminution de l'état de charge de consigne est choisi d'autant plus grand que la déclivité ou la pente du trajet parcouru en dernier lieu est importante.

5. Procédé conforme à l'une des revendications 1 à 4,
**caractérisé en ce que**
dans la logique de décision utilisée dans l'étape a), un signal de hauteur et/ou de pente absolu ou relatif (1, 2) est exploité.

6. Procédé conforme à la revendication 5,
**caractérisé en ce que**
le signal de hauteur et/ou de pente absolu ou relatif (1, 2) est déterminé :
- en mesurant la pression de l'air environnant et/ou
- en exploitant des signaux de hauteur d'un système de navigation et/ou
- en exploitant le couple de rotation d'entraînement et/ou l'accélération du véhicule et/ ou
- en exploitant l'inclinaison du véhicule par rapport à l'horizontale.

7. Procédé conforme à l'une des revendications 5 et 6,
**caractérisé en ce qu'**
à partir du signal de hauteur et/ou de pente absolu ou relatif (1, 2),
- on forme un premier signal qui reproduit des variations de hauteur ou des variations de pente liées au temps ou au trajet non filtrées ou uniquement faiblement filtrées, et
- on forme un second signal qui reproduit des variations de hauteur ou de pente liées au temps ou au trajet filtrées plus fortement par rapport au premier signal, et
- on reconnaît la présence d'un déplacement en montée ou en descente lorsque la valeur de la différence des deux signaux dépasse une valeur prédéfinie.

8. Procédé conforme à la revendication 7,
**caractérisé en ce que**
l'augmentation ou la diminution de l'état de charge de consigne est effectuée en fonction de la valeur de la différence des deux signaux.

9. Procédé de régulation de l'état de charge réel d'un accumulateur d'énergie électrique d'un véhicule selon lequel un état de charge de consigne est prédéfini en tant que grandeur de régulation,
**caractérisé en ce que**
l'état de charge de consigne est déterminé conformément à la mise en oeuvre du procédé conforme à l'une des revendications précédentes.
